# EUROPEAN PATENT SPECIFICATION

(11) **EP 2 546 424 B1**
(45) Date of publication and mention of the grant of the patent: **10.10.2018**
(21) Application number: 12154582.6
(22) Date of filing: 08.02.2012
(51) Int. Cl.: E04B 1/26, A47B 96/06, F16B 12/46, E04B 1/38

(54) **Angle bracket for fastening a first construction element to a second construction element and method for producing an angle bracket**
Winkelträger zur Befestigung eines ersten Bauelements an ein zweites Bauelement und Verfahren zur Herstellung eines Winkelträgers
Équerre de fixation pour l'assemblage d'un premier élément de construction à un second élément de construction et procédé de production d'une équerre de fixation

(30) Priority: 08.02.2011 GB 201102198
(43) Date of publication of application: 16.01.2013
(73) Proprietor: Simpson Strong-Tie Company, Inc., Pleasanton, CA 94588 (US)
(72) Inventor: Stauber, Denis, 85400 Saint Gemme La Plaine (FR)
(74) Representative: Boult Wade Tennant LLP

(56) References cited:
- EP-A2- 0 026 397
- DE-U1- 29 713 689
- GB-A- 254 434
- GB-A- 1 070 780
- US-A1- 2001 034 994

## Description

The present invention relates to an angle bracket for fastening a first construction element to a second construction element, and also to a method for producing an angle bracket.

EP0026397 describes a joist support for use in building and a building structure including such a support. It discloses at least an angle bracket for joining a first construction element to a second construction element, wherein the angle bracket comprises: a first leg provided in a first plane, the first leg comprising a joining edge extending a joining length in a longitudinal axis and a first free end part distal from the joining edge, the first leg having a centre of mass and a height; and a second leg provided in a second plane, the second leg comprising a joining edge extending a joining length in the longitudinal axis and a second free end part distal from the joining edge, the second leg having a centre of mass and a height;
wherein: the first leg and the second leg are arranged substantially perpendicular to one another via a common bending line, said common bending line connecting or joining the respective joining edges of the first leg and the second leg in the longitudinal axis. The joist support is a generally rectangular metal member which has a single oblique fold extending from one corner. The fold divides the member into flanges, the flange abutting the side of a joist in use and the other flange affording a bearing portion to rest on a supporting structure. The bearing portion is widest at the edge of the supporting structure which roughly coincides with the end of the joist to avoid localised overloading of the supporting structure. The fold forms a rigid spine throughout the joist support, to distribute the load of the joist across the width of the supporting structure. Hence low density lightweight blocks can be used for the supporting structure with reduced risk of crushing; a range of joist sizes can be accommodated using one size of support because only one side face of the joist is located against the flange, which also provides lateral restraint in combination with an upright extending into the masonry.

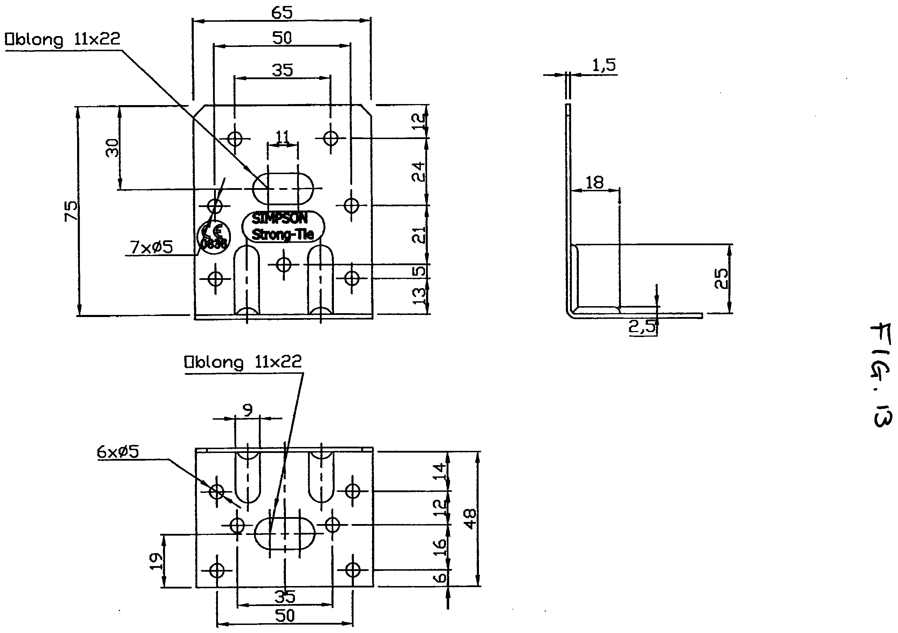

Angle brackets are widely used in various constructions e.g. when building a house. These angle brackets are used to join two construction elements with each other such as, for example, a truss and a wall plate, rafter and a wall plate, a girder and a joist, or a stud and a sill. The contact between the angle bracket and the construction elements to be joined is important in order to achieve a proper connection. Furthermore, the joining of upstanding planks or similar timber members is difficult because a plank standing on its narrower longitudinal edge has a high moment of inertia but a small surface to connect to other construction elements. Prior art angle brackets have sought to address this by engineering known angle brackets to have embossments and/or other reinforcements, such as side flanges, and fabricating them from suitably extensive and thick sheet material. Such a known angle bracket is the "E5/1.5" of the present applicant, as illustrated in Fig. 13. This engineering of course adds bulk in terms of the size and volume of known angle brackets, as well as increasing the amount of raw material required and the processing steps required to manufacture such angle brackets.

The present invention seeks to address these problems, yet does so rather surprisingly by providing an angle bracket having a smaller footprint area in each leg (and overall) and a thinner profile (both in terms or shape and thickness of raw material used). It is able to achieve both the necessary moment of inertia, bending resistance and structural integrity in a connection in use, yet also requires less space for connecting the angle bracket to the construction elements. The present invention thus provides a new angle bracket that addresses the problems of prior art angle brackets mentioned above, yet achieves a similar performance while being more efficiently formed.

The present invention provides, in a first aspect, an angle bracket (10; 100) for joining a first construction element (200) to a second construction element (300), with the features of claims 1 or 15.

Further aspects of the present invention are set forth in the appended claims.

Preferred embodiments of the present invention will now be described by way of example only with reference to the accompanying drawings, in which:
Fig. 1 shows a schematic perspective view of angle bracket according to a first preferred embodiment of the present invention;
Fig. 2 shows a schematic front elevation view of the angle bracket of Fig. 1;
Fig. 3 shows a schematic end elevation view of the angle bracket of Fig. 1;
Fig. 4 shows a schematic top plan view of the angle bracket of Fig. 1;
Fig. 5 shows a schematic perspective view of angle bracket according to a further preferred embodiment of the present invention;
Fig. 6 shows a schematic front elevation view of the angle bracket of Fig. 5;
Fig. 7 shows a schematic end elevation view of the angle bracket of Fig. 5;
Fig. 8 shows a schematic top plan view of the angle bracket of Fig. 5;
Fig. 9 shows a schematic perspective installation view of the angle bracket of Fig. 5 in its installed position joining two constructional elements;
Fig. 10 shows a schematic front elevation view of the installation of Fig. 9;
Fig. 11 shows a schematic end elevation view of the installation of Fig. 9;
Fig. 12 shows a schematic top plan view of the installation of Fig. 9; and
Fig. 13 shows a prior art angle bracket of the present applicant (an "E5/1.5").

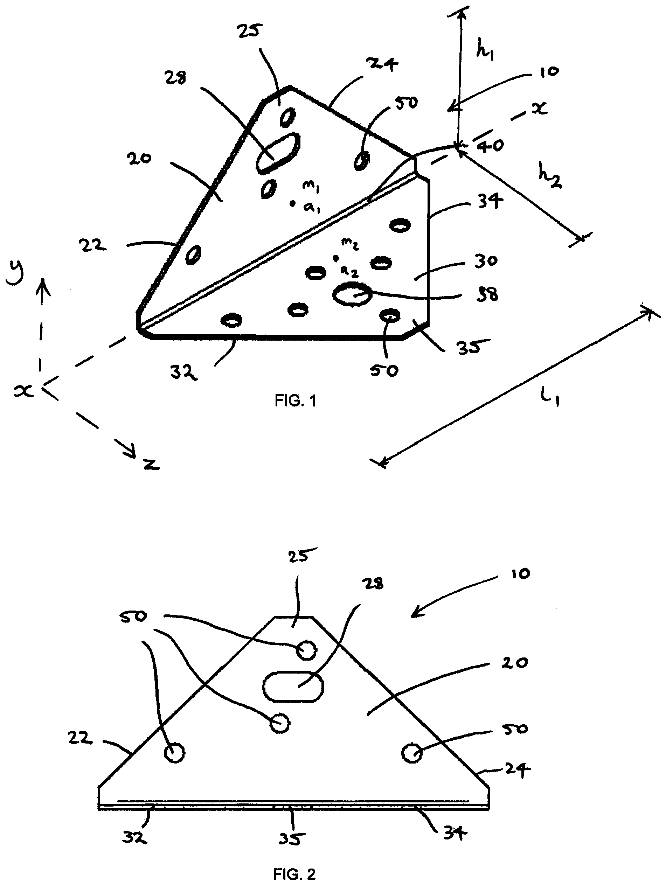

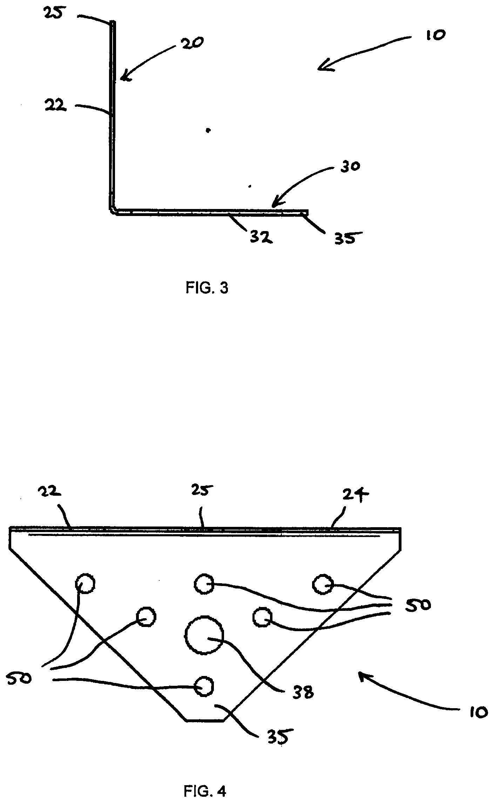

Referring first to Figs. 1 to 4, there is illustrated a first preferred embodiment of angle bracket 10 according to the present invention. The angle bracket 10 comprises a first leg 20 and a second leg 30. The first leg 20 is substantially planar and extends in a first plane (a vertical plane in the y-axis in the orientation shown, but which can adopt any orientation in use) and has sides 22, 24 which taper towards each other and terminate at a first free end part 25. The second leg 30 is likewise substantially planar and extends in a first plane (a horizontal plane in the z-axis in the orientation shown, but which can adopt any orientation in use, substantially perpendicular to the first leg 20) and has sides 32, 34 which taper towards each other and terminate at a second free end part 35. The first leg 20 and the second leg 30 are connected substantially perpendicular to one another along respective joining edges via a common bending line 40 which extends in a longitudinal axis (the x-axis in the orientation shown, but which can adopt any orientation in use). General fastener apertures 50 are provided for affixing the angle bracket 10 using fasteners to the underlying constructional members or elements to be connected. In addition, bolt apertures 28, 38 are provided in the respective first leg 20 and second leg 30 for affixing the angle bracket 10 to the underlying constructional members or elements using bolts or other like fasteners. The first leg 20 has a height h1 from the joining edge to the edge of first free end part 25, and the second leg 30 has a height h2 from the joining edge to the edge of second free end part 35. The common bending line 40 has a length l1 extending in the longitudinal axis, and the length l1 is greater than either height h1 or height h2. The first leg 20 comprises a centre of mass (m1), a centre of area (a1) and a centroid, each of which may be coincident or not. The second leg 30 comprises a centre of mass (m2), a centre of area (a2) and a centroid, each of which may be coincident or not.

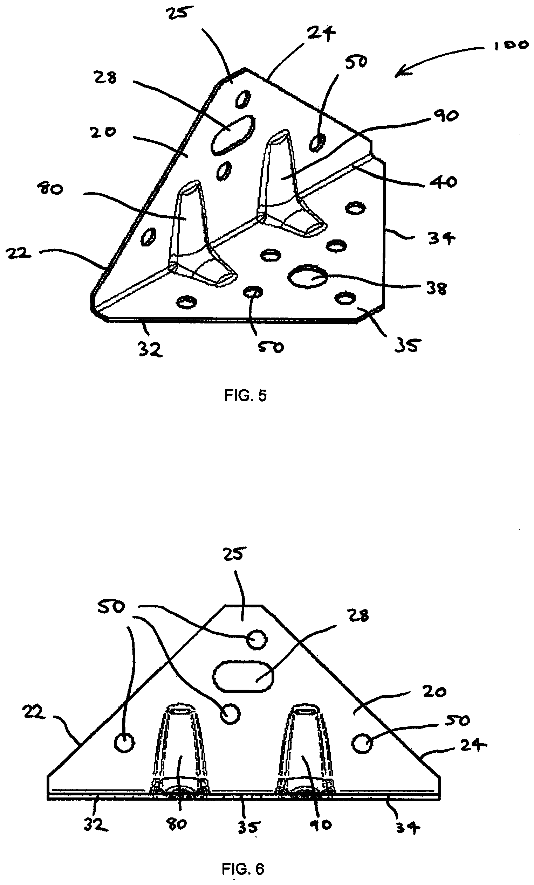

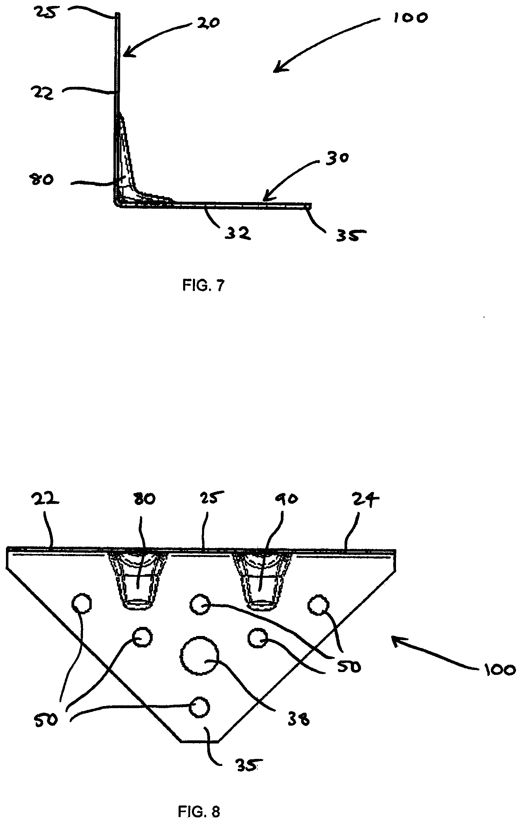

Referring next to Figs. 5 to 8, there is illustrated a further preferred embodiment of angle bracket 100 according to the present invention. Angle bracket 100 is additionally provided with embossments 80, 90, but is otherwise identical to angle bracket 10. Accordingly, like reference numerals are used to identify like features common to both angle brackets 10, 100. Embossments 80, 90 are each of elongate form, each tapering to a rounded head at each end thereof and formed so as to rise out of the respective planes of the first leg 20 and second leg 30 in which each is formed. Each embossment 80, 90 transitions the bend line of the bending line 40, where the width and height of each embossment 80, 90 is at its maximum. The embossments 80, 90 provide additional rigidity and bending strength to the angle bracket 100 and thus raise the moment of inertia of the angle bracket 100 and its structural integrity in use.

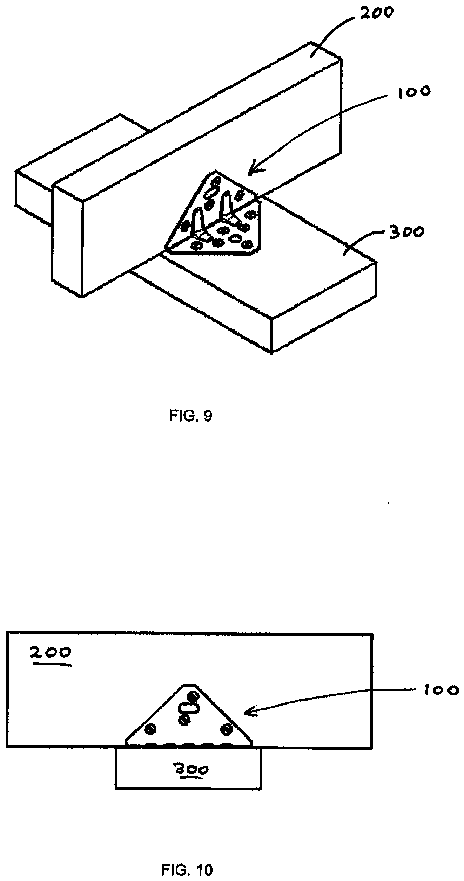

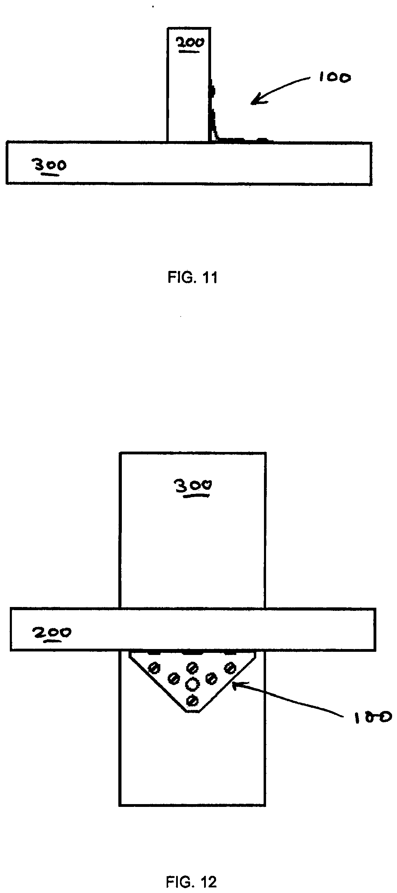

Figs. 9 to 12 illustrate the angle bracket 100 in an installed configuration. Angle bracket 100 is seen joining a first construction element 200 to a second construction element 300. It can be seen that fastening means 55 in the form of screws are arranged in the smaller general apertures 50 of both the first leg 20 and the second leg 30. Furthermore, it is seen that the very deliberate shape of angle bracket 100 provides the opportunity for positioning of the fastening means 55 in the apertures 50 of the angle bracket 100 so as to be more disposed towards the centre of the construction elements 200, 300. This assists in improving the resulting connection and its structural integrity. If the construction elements 200, 300 are e.g. timber this central placement of the fastening means 55 also minimises the risk of splitting the timber. As illustrated, it is possible, therefore, that none of the larger apertures 28, 38 are used. However, the central position of said larger apertures 28, 38 results in the same benefit of improving the resulting connection and its structural integrity and minimising the risk of splitting the timber.

According to the present invention, the angle bracket can preferably be produced by a method comprising the steps:
- providing sheet metal e.g. galvanised sheet metal from coils;
- punching apertures 28, 38, 50;
- punching a substantially rectangular piece of sheet metal from the coil;
- bending the rectangular piece of sheet metal to an angle of substantially 90° along a common bending line 40 positioned at least approximately diagonally across the rectangle so as to form first 20 and second 30 legs of generally triangular form; and
- optionally, forming one or more embossments 80, 90 in the first 20 and second 30 legs which traverse the common bending line 40.

This provides for an extremely efficient use of raw material and cost effective method of producing an angle bracket according to the present invention. Raw material, coils for example, are supplied in a desired width so as to avoid scrap material. The method could be carried out as a progressive die operation or as a transfer die operation, for example. It is important to note that the angle bracket can be produced from galvanised sheet metal and therefore the angle brackets are ready for use when leaving the final die.

In preferred embodiments of angle bracket 10, 100 according to the present invention, the width of the angle bracket along the axis of the common bending line 40 is longer than the width of the free end part 25, 35 of a leg 20, 30. Indeed, the material is deliberately positioned so as to maximise its use in the region around a line which extends from the mid-point of the common bending line 40, through the centroid and on to the free end part 25, 35 of each leg 20, 30, while reducing the length of parallel lines at the extremities (i.e. at the proximal and distal end of the common bending line 40). This typically results in a generally triangular shape for each leg 20, 30, but this is not limiting and any functionally similar shape may be adopted. In this way, the angle bracket provides an optimised relationship between the load capacity of the angle bracket and the amount of material required with a rather surprising synergy. Surprisingly, it has been found by the applicant that the result is a reduction of up to 50% of the material compared with the existing prior art E5/1.5 angle bracket for the same mechanical resistance. This is evidenced by the test results listed in the table below which shows results for an angle bracket according to the present invention "AT2" as against the prior art angle bracket "E5/1.5" of Fig.13:

| **Test direction** | **N° test** | **Fasteners** | | **Characteristic values for 2 brackets ATZ (en kN)** | **Values FCBA tests for 2 brakets E5/1,5 (en kN)** |
|---|---|---|---|---|---|
| | | **Truss** | **support** | | |
| LATERAL | *SST219-10* | bolt | nails | 6.0 | |
| | *SST220-10* | nails | nails | 9.1 | 9.3 |
| | *SST221-10* | wood screw | bolt | - | |
| UPLIFT | *SST222-10* | bolt | nails | 4.13 | |
| | *SST223-10* | nails | nails | 4.34 | 4.4 |
| | *SST224-10* | wood screw | bolt | - | |

The preferred embodiment of angle bracket 100 shown in Figure 5 is formed from 1 mm thick steel. The flat (blank) component is an approximate 80x80mm square with chamfers at the apexes, then folded with a substantially 90° angle in the diagonal so to form the generally triangular shape of each leg 20, 30. The second leg 30 of the angle bracket 100 is to be fixed on the support, with a round aperture 38 for possible bolt connection. The first leg 20 is offered up to the truss and its oblong aperture 28 allows for sliding on its support.

The first leg 20 and the second leg 30 are provided with a number of smaller fastener apertures 50 and two larger fastener apertures 28, 38. The smaller fastener apertures 50 could e.g. have a diameter of 5 mm, although any suitable diameter may be beneficially employed. Similarly, in the preferred embodiments of the invention illustrated, the larger fastener apertures 28, 38 have different diameters, with aperture 28 being Ø16mmx8mm and aperture 38 being Ø10mm. Alternatively, the same diameter may be adopted for each aperture 28, 38. In the preferred embodiment, fastener aperture 28 is elongated so as to provide for tolerance adjustment on installation. Indeed, any suitable diameter/shape may be beneficially employed. In a further embodiment of angle bracket according to the present invention (not shown), at least one of the apertures of the first leg or the second leg may be larger than the others. In this way it is provided that different types of fastening means could be used e.g. nails and screws for the smaller apertures and a connector screw for the larger aperture. In a further embodiment of angle bracket according to the present invention (not shown) at least two apertures can be larger than the others, said two larger apertures having diameters that differ from each other. Preferably, the at least two apertures could be placed on each leg. If only one of the larger apertures is used it is possible that, in use, the installer is free to orient the angle bracket according to the fastening means at hand. Furthermore, specifications could demand use of certain fastening means and the angle bracket being provided with apertures of different diameters would in this way be more likely to support the specifications.

In a further preferred embodiment according to the present invention, the angle bracket can be made from a rectangular piece of sheet metal. In this way, only the punched out material from the apertures is wasted. Furthermore, it is possible to use e.g. coils as raw material. In a further preferred embodiment according to the present invention, the angle bracket can be made of galvanised high strength steel. In yet another embodiment, the sheet metal can have a thickness of 0.5 - 5 mm, preferably 1 - 3.5 mm, most preferred 1 mm. Using galvanised steel, the angle bracket is better adapted to withstand corrosion. However, the combination of high strength steel with a thickness of e.g. 1 mm and the galvanisation gives the opportunity to reduce the thickness of the material used for the angle bracket. Using thinner material it is possible to achieve bending and forming or embossments during the same process (and time) and with less risk of the galvanisation peeling or scratching off. The preferred quality of the steel may be S250GD + Z275 according to EN10346:2004.

In yet another preferred embodiment according to the present invention (not shown) one leg of the angle bracket may be longer than the other. If an angle bracket is used with a sill, on which a pillar or a stud is to be fastened, it is preferred that the one leg of the angle bracket extends the full distance from the lower part of the sill to a certain height on the pillar. The other leg does not necessarily need to be extended or to be longer if it is e.g. fastened by a threaded rod in concrete stemwalls.

Although not illustrated, the first leg 20 and second leg 30 of angles brackets 10, 100 may be provided with ribs along their side edges 22, 24, 32, 34 connected by common bending lines in the respective legs 20, 30 to provide yet further rigidity of the angle brackets 10, 100 and thus raising the moment of inertia of the angle brackets 10, 100 even further.

The invention is described above by way of example with the assumption that the angle bracket is used to join two construction elements, typically of timber. However, within the scope of the invention the angle bracket can be used in other applications as well. In addition, other materials used to form the construction elements may be used, such as concrete, metal, composite or any combination thereof.

Whilst preferred embodiments of the present invention have been described above and some illustrated in the drawings, these are by way of example only and non-limiting. It will be appreciated by those skilled in the art that many alternatives are possible within the ambit of the invention. For example, the precise shape of the blank may take many different detailed forms, yet adopt the overriding principal of how the material is selectively positioned. As such, the true scope of the invention is that as set out in the appended claims.
The scope of the claimed invention is that as set out in the appended claims.
A method and further angle brackets and according to the present disclosure are described in the following numbered clauses
1. An angle bracket (10; 100) for joining a first construction element (200) to a second construction element (300), wherein the angle bracket (10; 100) comprises:
   a first leg (20) provided in a first plane, the first leg (20) comprising a joining edge extending a joining length (11) in a longitudinal axis (x) and a first free end part (25) distal from the joining edge, the first leg (20) having a centre of mass (m1) and a height (h1); and
   a second leg (30) provided in a second plane, the second leg (30) comprising a joining edge extending a joining length (11) in the longitudinal axis (x) and a second free end part (35) distal from the joining edge, the second leg (30) having a centre of mass (m2) and a height (h2), wherein:
      the first leg (20) and the second leg (30) are arranged substantially perpendicular to one another via a common bending line (40), said common bending line (40) connecting or joining the respective joining edges of the first leg (20) and the second leg (30) in the longitudinal axis (x);
      at least a portion of the first leg (20) between the joining edge and its centre of mass (m1) is wider in an axis parallel to the longitudinal axis (x) than the widest part of the first leg (20) between its centre of mass (m1) and the first free end part (25);
      at least a portion of the second leg (30) between the joining edge and its centre of mass (m2) is wider in an axis parallel to the longitudinal axis (x) than the widest part of the second leg (20) between its centre of mass (m2) and the second free end part (35); and
      the joining length (11) of the angle bracket (10; 100) is greater than the height (h1) of the first leg (20) or the height (h2) of the second leg (30).
2. An angle bracket (10; 100) as set forth in clause 1 wherein the height (h1) of the first leg (20) is the same as the height (h2) of the second leg (30).
3. An angle bracket (10; 100) as set forth in clause 1 wherein the height (h1) of the first leg (20) is not the same as the height (h2) of the second leg (30).
4. An angle bracket (10; 100) as set forth in any one of the preceding clauses further comprising a plurality of apertures (28; 38; 50) for receiving means (55) for fastening, in use, the first leg (20) of the angle bracket (10; 100) to a first construction element (200) and the second leg (30) of the angle bracket (10; 100) to a second construction element (300).
5. An angle bracket (10; 100) as set forth in any one of the preceding clauses further comprising a one or more embossments (80, 90).
6. An angle bracket (10; 100) as set forth in any one of the preceding clauses wherein the width of the angle bracket (10; 100) along the axis of the common bending section (40) is greater than the width of each respective first and second free end parts (25, 35).
7. An angle bracket (10; 100) as set forth in any one of the preceding clauses wherein each of the first leg (20) and second leg (30) are of generally triangular form.
8. An angle bracket (10; 100) as set forth in any one of clauses 4 to 7 wherein at least one of the apertures (28; 38; 50) of the first leg (20) or the second leg (30) is larger than the others.
9. An angle bracket (10; 100) as set forth in any one of clauses 4 to 8 wherein at least two of the apertures (28; 38; 50) are larger than the others, said two larger apertures having diameters that differ from each other.
10. An angle bracket (10; 100) as set forth in any one of the preceding clauses wherein the angle bracket (10; 100) is made or formed from a rectangular piece of sheet metal.
11. An angle bracket (10; 100) as set forth in any one of clauses 1 to 9 wherein the angle bracket (10; 100) is made or formed from a polygonal piece of sheet metal.
12. An angle bracket (10; 100) as set forth in any one of the preceding clauses wherein the angle bracket (10; 100) is made or formed from a piece of sheet metal.
13. An angle bracket (10; 100) as set forth in any one of the preceding clauses wherein the angle bracket (10; 100) is made of a galvanised high strength steel.
14. An angle bracket (10; 100) as set forth in any one of the preceding clauses wherein the angle bracket (10; 100) is made from sheet metal having a thickness of 0.5 - 5 mm, more preferably 1 - 3.5 mm, most preferred 1 mm.
15. An angle bracket (10; 100) for joining a first construction element (200) to a second construction element (300), wherein the angle bracket (10; 100) comprises:
   a first leg (20) provided in a first plane, the first leg (20) comprising a joining edge extending a joining length (l1) in a longitudinal axis (x) and a first free end part (25) distal from the joining edge, the first leg (20) having a centre of area (a1) and a height (h1); and
   a second leg (30) provided in a second plane, the second leg (30) comprising a joining edge extending a joining length (l1) in the longitudinal axis (x) and a second free end part (35) distal from the joining edge, the second leg (30) having a centre of area (a2) and a height (h2), wherein:
      the first leg (20) and the second leg (30) are arranged substantially perpendicular to one another via a common bending line (40), said common bending line (40) connecting or joining the respective joining edges of the first leg (20) and the second leg (30) in the longitudinal axis (x);
      at least a portion of the first leg (20) between the joining edge and its centre of area (a1) is wider in an axis parallel to the longitudinal axis (x) than the widest part of the first leg (20) between its centre of area (a1) and the first free end part (25);
      at least a portion of the second leg (30) between the joining edge and its centre of area (a2) is wider in an axis parallel to the longitudinal axis (x) than the widest part of the second leg (20) between its centre of area (a2) and the second free end part (35); and
      the joining length (l1) of the angle bracket (10; 100) is greater than the height (h1) of the first leg (20) or the height (h2) of the second leg (30).
16. An angle bracket (10; 100) for joining a first construction element (200) to a second construction element (300), wherein the angle bracket (10; 100) comprises:
   a first leg (20) provided in a first plane, said first leg (20) comprising a first free end part (25), a first centroid and a joining edge; and
   a second leg (30) provided in a second plane, said second leg (30) comprising a second free end part (35), a second centroid and a joining edge, wherein:
      the first leg (20) and said second leg (30) are arranged substantially perpendicular to one another via a common bending section (40), said common bending section (40) connecting or joining the respective joining edges of the first leg (20) and the second leg (30);
      the material forming the first leg (20) is predominantly disposed around the first centroid, and extends away from the common bending section (40) past the centroid towards the first free end part (25); and
      the material forming the second leg (30) is predominantly disposed around the second centroid, and extends away from the common bending section (40) towards the second free end part (35).
17. An angle bracket (10; 100) for joining a first construction element (200) to a second construction element (300), wherein the angle bracket (10; 100) comprises:
   a first leg (20) provided in a first plane; and
   a second leg (30) provided in a second plane, wherein:
      the first leg (20) and said second leg (30) are arranged substantially perpendicular to one another;
      the first leg (20) is non-square; and
      the second leg (30) is non-square;
      wherein the first leg (20) comprises side edges which are substantially linear and at least partially converge.
18. An angle bracket (10; 100) as set forth in clause 17 wherein the second leg (30) comprises side edges which are substantially linear and at least partially converge.
19. An angle bracket (10; 100) for joining a first construction element (200) to a second construction element (300), wherein the angle bracket (10; 100) comprises:
   a first leg (20) provided in a first plane; and
   a second leg (30) provided in a second plane, wherein:
      the first leg (20) and said second leg (30) are arranged substantially perpendicular to one another;
      the first leg (20) is non-square; and
      the second leg (30) is non-square;
      wherein the first leg (20) comprises at least one side edge which is non linear.
20. An angle bracket (10; 100) as set forth in clause 19 wherein the second leg (30) comprises at least one side edge which is non linear.
21. An angle bracket (10; 100) as set forth in clause 19 or clause 20 wherein the first leg (20) comprises side edges which are non-linear and at least partially converge.
22. An angle bracket (10; 100) as set forth in clause 19, 20, or 21 wherein the second leg (30) comprises side edges which are non-linear and at least partially converge.
23. An angle bracket (10; 100) for joining a first construction element (200) to a second construction element (300), wherein the angle bracket (10; 100) comprises:
   a first leg (20) provided in a first plane and having a joining edge; and
   a second leg (30) provided in a second plane and having a joining edge, wherein:
      the first leg (20) and said second leg (30) are arranged substantially perpendicular to one another via a common bending line (40), said common bending line (40) connecting or joining the respective joining edges of the first leg (20) and the second leg (30); and
      the common bending line (40) extends in a longitudinal axis (x) which forms and/or defines the widest part of the angle bracket (10; 100) in the longitudinal axis (x) or longitudinal axes parallel thereto.
24. An angle bracket (10; 100) for joining a first construction element (200) to a second construction element (300), wherein the angle bracket (10; 100) is of generally rhomboidal form and comprises:
   a first leg (20) provided in a first plane and having a joining edge; and
   a second leg (30) provided in a second plane and having a joining edge, wherein:
      the first leg (20) and said second leg (30) are arranged substantially perpendicular to one another via a common bending line (40), said common bending line (40) connecting or joining the respective joining edges of the first leg (20) and the second leg (30); and
      the common bending line (40) extends in a longitudinal axis (x) which is formed in a diagonal of the generally rhomboidal form.
25. An angle bracket (10; 100) for joining a first construction element (200) to a second construction element (300), wherein the angle bracket (10; 100) comprises:
   a first leg (20) provided in a first plane, said first leg (20) comprising a first free end part (25; and
   a second leg (30) provided in a second plane, said second leg (30) comprising a second free end part (35), wherein:
      the first leg (20) and said second leg (30) are arranged substantially perpendicular to one another via a common bending line (40), said common bending line (40) connecting or joining the respective joining edges of the first leg (20) and the second leg (30);
      the material forming the first leg (20) is disposed to provide a maximum width along the common bending line (40) and comprises at least a portion of reduced width in a region between the first free end part (25) and the common bending line (40); and
      the material forming the second leg (30) is disposed to provide a maximum width along the common bending line (40) and comprises at least a portion of reduced width in a region between the second free end part (25) and the common bending line (40);
26. A method for manufacturing an angle bracket (10; 100) according to any one of clauses 1 to 25 wherein the method comprises the steps of:
   providing sheet metal;
   punching apertures (28; 38; 50) in the sheet metal;
   punching a substantially rectangular piece from the sheet metal; and
   bending the rectangular piece of sheet metal to an angle of substantially 90° along the common bending section (40) positioned at least approximately diagonally across the rectangle so as to form first (20) and second (30) legs of generally triangular form.
27. A method for manufacturing an angle bracket (10; 100) according to clause 26 further comprising the step of forming one or more embossments (80, 90) in the first (20) and second (30) legs which traverse the common bending section (40).
28. An angle bracket (10; 100) substantially as hereinbefore described with reference to or as shown in the accompanying drawings.
29. A method for manufacturing an angle bracket (10; 100) substantially as hereinbefore described with reference to or as shown in the accompanying drawings.

## Claims

1. An angle bracket (10; 100) for joining a first construction element (200) to a second construction element (300), wherein the angle bracket (10; 100) comprises:
a first leg (20) provided in a first plane, the first leg (20) comprising a joining edge extending a joining length (l1) in a longitudinal axis (x) and a first free end part (25) distal from the joining edge, the first leg (20) having a centre of mass (m1) and a height (h1); and
a second leg (30) provided in a second plane, the second leg (30) comprising a joining edge extending a joining length (l1) in the longitudinal axis (x) and a second free end part (35) distal from the joining edge, the second leg (30) having a centre of mass (m2) and a height (h2), wherein:
the first leg (20) and the second leg (30) are arranged substantially perpendicular to one another via a common bending line (40), said common bending line (40) connecting or joining the respective joining edges of the first leg (20) and the second leg (30) in the longitudinal axis (x);
at least a portion of the first leg (20) between the joining edge and its centre of mass (m1) is wider in an axis parallel to the longitudinal axis (x) than the widest part of the first leg (20) between its centre of mass (m1) and the first free end part (25);
at least a portion of the second leg (30) between the joining edge and its centre of mass (m2) is wider in an axis parallel to the longitudinal axis (x) than the widest part of the second leg (20) between its centre of mass (m2) and the second free end part (35);
the joining length (l1) of the angle bracket (10; 100) is greater than the height (h1) of the first leg (20) or the height (h2) of the second leg (30); and
the common bending line (40) extending in the longitudinal axis (x) forms and/or defines the widest part of the angle bracket (10; 100) in the longitudinal axis (x) or longitudinal axes parallel thereto.

2. An angle bracket (10; 100) as claimed in claim 1 wherein the height (h1) of the first leg (20) is the same as the height (h2) of the second leg (30).

3. An angle bracket (10; 100) as claimed in claim 1 wherein the height (h1) of the first leg (20) is not the same as the height (h2) of the second leg (30).

4. An angle bracket (10; 100) as claimed in any one of the preceding claims further comprising a plurality of apertures (28; 38; 50) for receiving means (55) for fastening, in use, the first leg (20) of the angle bracket (10; 100) to a first construction element (200) and the second leg (30) of the angle bracket (10; 100) to a second construction element (300).

5. An angle bracket (10; 100) as claimed in any one of the preceding claims further comprising a one or more embossments (80, 90).

6. An angle bracket (10; 100) as claimed in any one of the preceding claims wherein the width of the angle bracket (10; 100) along the axis of the common bending section (40) is greater than the width of each respective first and second free end parts (25, 35).

7. An angle bracket (10; 100) as claimed in any one of the preceding claims wherein each of the first leg (20) and second leg (30) are of generally triangular form.

8. An angle bracket (10; 100) as claimed in any one of claims 4 to 7 wherein at least one of the apertures (28; 38; 50) of the first leg (20) or the second leg (30) is larger than the others.

9. An angle bracket (10; 100) as claimed in any one of claims 4 to 8 wherein at least two of the apertures (28; 38; 50) are larger than the others, said two larger apertures having diameters that differ from each other.

10. An angle bracket (10; 100) as claimed in any one of the preceding claims wherein the angle bracket (10; 100) is made or formed from a rectangular piece of sheet metal.

11. An angle bracket (10; 100) as claimed in any one of claims 1 to 9 wherein the angle bracket (10; 100) is made or formed from a polygonal piece of sheet metal.

12. An angle bracket (10; 100) as claimed in any one of the preceding claims wherein the angle bracket (10; 100) is made or formed from a piece of sheet metal.

13. An angle bracket (10; 100) as claimed in any one of the preceding claims wherein the angle bracket (10; 100) is made of a galvanised high strength steel.

14. An angle bracket (10; 100) as claimed in any one of the preceding claims wherein the angle bracket (10; 100) is made from sheet metal having a thickness of 0.5 - 5 mm, more preferably 1 - 3.5 mm, most preferred 1 mm.

15. An angle bracket (10; 100) for joining a first construction element (200) to a second construction element (300), wherein the angle bracket (10; 100) comprises:
a first leg (20) provided in a first plane, the first leg (20) comprising a joining edge extending a joining length (l1) in a longitudinal axis (x) and a first free end part (25) distal from the joining edge, the first leg (20) having a centre of area (a1) and a height (h1); and
a second leg (30) provided in a second plane, the second leg (30) comprising a joining edge extending a joining length (l1) in the longitudinal axis (x) and a second free end part (35) distal from the joining edge, the second leg (30) having a centre of area (a2) and a height (h2), wherein:
the first leg (20) and the second leg (30) are arranged substantially perpendicular to one another via a common bending line (40), said common bending line (40) connecting or joining the respective joining edges of the first leg (20) and the second leg (30) in the longitudinal axis (x);
at least a portion of the first leg (20) between the joining edge and its centre of area (a1) is wider in an axis parallel to the longitudinal axis (x) than the widest part of the first leg (20) between its centre of area (a1) and the first free end part (25);
at least a portion of the second leg (30) between the joining edge and its centre of area (a2) is wider in an axis parallel to the longitudinal axis (x) than the widest part of the second leg (20) between its centre of area (a2) and the second free end part (35);
the joining length (l1) of the angle bracket (10; 100) is greater than the height (h1) of the first leg (20) or the height (h2) of the second leg (30); and
the common bending line (40) extending in the longitudinal axis (x) forms and/or defines the widest part of the angle bracket (10; 100) in the longitudinal axis (x) or longitudinal axes parallel thereto.

## Patentansprüche

1. Winkelhalter (10; 100) zum Verbinden eines ersten Konstruktionselements (200) mit einem zweiten Konstruktionselement (300), wobei der Winkelhalter (10; 100) umfasst:
einen in einer ersten Ebene bereitgestellten ersten Schenkel (20), wobei der erste Schenkel (20) einen Verbindungsrand, welcher sich über eine Verbindungslänge (l1) in einer Längsachse (x) erstreckt, und einen ersten freien Endteil (25) distal von dem Verbindungsrand umfasst, wobei der erste Schenkel (20) einen Massenschwerpunkt (m1) und eine Höhe (h1) aufweist; und
einen in einer zweiten Ebene bereitgestellten zweiten Schenkel (30), wobei der zweite Schenkel (30) einen Verbindungsrand, welcher sich über eine Verbindungslänge (l1) in der Längsachse (x) erstreckt, und einen zweiten freien Endteil (35) distal von dem Verbindungsrand umfasst, wobei der zweite Schenkel (30) einen Massenschwerpunkt (m2) und eine Höhe (h2) aufweist, wobei:
der erste Schenkel (20) und der zweite Schenkel (30) im Wesentlichen zueinander senkrecht mittels einer gemeinsamen Abwinklungslinie (40) angeordnet sind, wobei die gemeinsame Abwinklungslinie (40) die jeweiligen Verbindungsränder des ersten Schenkels (20) und des zweiten Schenkels (30) in der Längsachse (x) zusammenfügt oder verbindet;
wenigstens ein Abschnitt des ersten Schenkels (20) zwischen dem Verbindungsrand und seinem Massenschwerpunkt (m1) in einer zu der Längsachse (x) parallelen Achse breiter ist als der breiteste Teil des ersten Schenkels (20) zwischen seinem Massenschwerpunkt (m1) und dem ersten freien Endteil (25);
wenigstens ein Abschnitt des zweiten Schenkels (30) zwischen dem Verbindungsrand und seinem Massenschwerpunkt (m2) in einer zu der Längsachse (x) parallelen Achse breiter ist als der breiteste Teil des zweiten Schenkels (30) zwischen seinem Massenschwerpunkt (m2) und dem zweiten freien Endteil (35);
die Verbindungslänge (l1) des Winkelhalters (10; 100) größer ist als die Höhe (h1) des ersten Schenkels (20) oder die Höhe (h2) des zweiten Schenkels (30); und
die gemeinsame Abwinklungslinie (40), welche sich in der Längsachse (x) erstreckt, der breiteste Teil des Winkelhalters (10; 100) in der Längsachse (x) oder dazu parallelen Längsachsen ausbildet und/oder definiert.

2. Winkelhalter (10; 100) nach Anspruch 1, wobei die Höhe (h1) des ersten Schenkels (20) die gleiche wie die Höhe (h2) des zweiten Schenkels (30) ist.

3. Winkelhalter (10; 100) nach Anspruch 1, wobei die Höhe (h1) des ersten Schenkels (20) nicht die gleiche wie die Höhe (h2) des zweiten Schenkels (30) ist.

4. Winkelhalter (10; 100) nach einem der vorhergehenden Ansprüche, ferner umfassend eine Mehrzahl von Öffnungen (28; 38; 50) zum Aufnehmen von Mitteln (55), um bei einer Verwendung den ersten Schenkel (20) des Winkelhalters (10; 100) an einem ersten Konstruktionselement (200) und den zweiten Schenkel (30) des Winkelhalters (10; 100) an einem zweiten Konstruktionselement (300) zu befestigen.

5. Winkelhalter (10; 100) nach einem der vorhergehenden Ansprüche, ferner umfassend eine oder mehrere Wülste (80, 90).

6. Winkelhalter (10; 100) nach einem der vorhergehenden Ansprüche, wobei die Breite des Winkelhalters (10; 100) entlang der Achse des gemeinsamen Abwinklungsabschnitts (40) größer ist als die Breite jedes entsprechenden ersten und zweiten freien Endteils (25, 35).

7. Winkelhalter (10; 100) nach einem der vorhergehenden Ansprüche, wobei jeder aus dem ersten Schenkel (20) und dem zweiten Schenkel (30) im Wesentlichen eine dreieckige Form aufweist.

8. Winkelhalter (10; 100) nach einem der Ansprüche 4 bis 7, wobei wenigstens eine der Öffnungen (28; 38; 50) des ersten Schenkels (20) oder des zweiten Schenkels (30) größer ist als die anderen.

9. Winkelhalter (10; 100) nach einem der Ansprüche 4 bis 8, wobei wenigstens zwei der Öffnungen (28; 38; 50) größer sind als die anderen, wobei zwei größeren Öffnungen Durchmesser aufweisen, welche sich voneinander unterscheiden.

10. Winkelhalter (10; 100) nach einem der vorhergehenden Ansprüche, wobei der Winkelhalter (10; 100) aus einem rechteckigen Metallblechstück hergestellt oder ausgebildet ist.

11. Winkelhalter (10; 100) nach einem der Ansprüche 1 bis 9, wobei der Winkelhalter (10; 100) aus einem polygonalen Metallblechstück hergestellt oder ausgebildet ist.

12. Winkelhalter (10; 100) nach einem der vorhergehenden Ansprüche, wobei der Winkelhalter (10; 100) aus einem Metallblechstück hergestellt oder ausgebildet ist.

13. Winkelhalter (10; 100) nach einem der vorhergehenden Ansprüche, wobei der Winkelhalter (10; 100) aus einem galvanisierten hochfesten Stahl hergestellt ist.

14. Winkelhalter (10; 100) nach einem der vorhergehenden Ansprüche, wobei der Winkelhalter (10; 100) aus einem Metallblech mit einer Dicke von 0,5 - 5 mm, vorzugsweise von 1 - 3,5 mm, höchstvorzugsweise von 1 mm hergestellt ist.

15. Winkelhalter (10; 100) zum Verbinden eines ersten Konstruktionselements (200) mit einem zweiten Konstruktionselement (300), wobei der Winkelhalter (10; 100) umfasst:
einen in einer ersten Ebene bereitgestellten ersten Schenkel (20), wobei der erste Schenkel (20) einen Verbindungsrand, welcher sich über eine Verbindungslänge (l1) in einer Längsachse (x) erstreckt, und einen ersten freien Endteil (25) distal von dem Verbindungsrand umfasst, wobei der erste Schenkel (20) einen Flächenmittelpunkt (a1) und eine Höhe (h1) aufweist; und
einen in einer zweiten Ebene bereitgestellten zweiten Schenkel (30), wobei der zweite Schenkel (30) einen Verbindungsrand, welcher sich über eine Verbindungslänge (l1) in der Längsachse (x) erstreckt, und einen zweiten freien Endteil (35) distal von dem Verbindungsrand umfasst, wobei der zweite Schenkel (30) einen Flächenmittelpunkt (a2) und eine Höhe (h2) aufweist, wobei:
der erste Schenkel (20) und der zweite Schenkel (30) im Wesentlichen zueinander senkrecht mittels einer gemeinsamen Abwinklungslinie (40) angeordnet sind, wobei die gemeinsame Abwinklungslinie (40) die jeweiligen Verbindungsränder des ersten Schenkels (20) und des zweiten Schenkels (30) in der Längsachse (x) zusammenfügt oder verbindet;
wenigstens ein Abschnitt des ersten Schenkels (20) zwischen dem Verbindungsrand und seinem Flächenmittelpunkt (a1) in einer zu der Längsachse (x) parallelen Achse breiter ist als der breiteste Teil des ersten Schenkels (20) zwischen seinem Flächenmittelpunkt (a1) und dem ersten freien Endteil (25);
wenigstens ein Abschnitt des zweiten Schenkels (30) zwischen dem Verbindungsrand und seinem Flächenmittelpunkt (a2) in einer zu der Längsachse (x) parallelen Achse breiter ist als der breiteste Teil des zweiten Schenkels (30) zwischen seinem Flächenmittelpunkt (a2) und dem zweiten freien Endteil (35);
die Verbindungslänge (l1) des Winkelhalters (10; 100) größer ist als die Höhe (h1) des ersten Schenkels (20) oder die Höhe (h2) des zweiten Schenkels (30); und
die gemeinsame Abwinklungslinie (40), welche sich in der Längsachse (x) erstreckt, der breiteste Teil des Winkelhalters (10; 100) in der Längsachse (x) oder dazu parallelen Längsachsen ausbildet und/oder definiert.

## Revendications

1. Cornière d'assemblage (10 ; 100) pour assembler un premier élément de construction (200) à un deuxième élément de construction (300), où la cornière d'assemblage (10 ; 100) comprend :
une première branche (20) prévue dans un premier plan, la première branche (20) comprenant un bord d'assemblage s'étendant sur une longueur d'assemblage (l1) dans un axe longitudinal (x) et une première partie d'extrémité libre (25) distale par rapport au bord d'assemblage, la première branche (20) ayant un centre de masse (m1) et une hauteur (h1) ; et
une deuxième branche (30) prévue dans un deuxième plan, la deuxième branche (30) comprenant un bord d'assemblage s'étendant sur une longueur d'assemblage (l1) dans l'axe longitudinal (x) et une deuxième partie d'extrémité libre (35) distale par rapport au bord d'assemblage, la deuxième branche (30) ayant un centre de masse (m2) et une hauteur (h2), dans laquelle :
la première branche (20) et la deuxième branche (30) sont agencées de manière essentiellement perpendiculaire l'une à l'autre par une ligne de pliage commune (40), ladite ligne de pliage commune (40) reliant ou assemblant les bords d'assemblage respectifs de la première branche (20) et de la deuxième branche (30) dans l'axe longitudinal (x) ;
au moins une partie de la première branche (20) entre le bord d'assemblage et son centre de masse (m1) est plus large dans un axe parallèle à l'axe longitudinal (x) que la partie la plus large de la première branche (20) entre son centre de masse (m1) et la première partie d'extrémité libre (25) ;
au moins une partie de la deuxième branche (30) entre le bord d'assemblage et son centre de masse (m2) est plus large dans un axe parallèle à l'axe longitudinal (x) que la partie la plus large de la deuxième branche (20) entre son centre de masse (m2) et la deuxième partie d'extrémité libre (35) ;
la longueur d'assemblage (l1) de la cornière d'assemblage (10 ; 100) est supérieure à la hauteur (h1) de la première branche (20) ou à la hauteur (h2) de la deuxième branche (30) ; et
la ligne de pliage commune (40) s'étendant dans l'axe longitudinal (x) forme et/ou définit la partie la plus large de la cornière d'assemblage (10 ; 100) dans l'axe longitudinal (x) ou des axes longitudinaux parallèles à celui-ci.

2. Cornière d'assemblage (10 ; 100) telle que revendiquée dans la revendication 1, dans laquelle la hauteur (h1) de la première branche (20) est la même que la hauteur (h2) de la deuxième branche (30).

3. Cornière d'assemblage (10 ; 100) telle que revendiquée dans la revendication 1, dans laquelle la hauteur (h1) de la première branche (20) n'est pas la même que la hauteur (h2) de la deuxième branche (30).

4. Cornière d'assemblage (10 ; 100) telle que revendiquée dans l'une quelconque des revendications précédentes comprenant en outre une pluralité d'ouvertures (28 ; 38 ; 50) pour recevoir des moyens (55) pour fixer, en cours d'utilisation, la première branche (20) de la cornière d'assemblage (10 ; 100) à un premier élément de construction (200) et la deuxième branche (30) de la cornière d'assemblage (10 ; 100) à un deuxième élément de construction (300).

5. Cornière d'assemblage (10 ; 100) telle que revendiquée dans l'une quelconque des revendications précédentes, comprenant en outre un ou plusieurs bossage(s) (80, 90).

6. Cornière d'assemblage (10 ; 100) telle que revendiquée dans l'une quelconque des revendications précédentes dans laquelle la largeur de la cornière d'assemblage (10 ; 100) le long de l'axe de la section de pliage commune (40) est supérieure à la largeur de chacune des première et deuxième parties d'extrémité libre respectives (25, 35).

7. Cornière d'assemblage (10 ; 100) telle que revendiquée dans l'une quelconque des revendications précédentes dans laquelle chacune de la première branche (20) et de la deuxième branche (30) présente une forme globalement triangulaire.

8. Cornière d'assemblage (10 ; 100) telle que revendiquée dans l'une quelconque des revendications 4 à 7 dans laquelle au moins l'une des ouvertures (28 ; 38 ; 50) de la première branche (20) ou de la deuxième branche (30) est plus grande que les autres.

9. Cornière d'assemblage (10 ; 100) telle que revendiquée dans l'une quelconque des revendications 4 à 8 dans laquelle au moins deux des ouvertures (28 ; 38 ; 50) sont plus grandes que les autres, lesdites deux plus grandes ouvertures ayant des diamètres différents.

10. Cornière d'assemblage (10 ; 100) telle que revendiquée dans l'une quelconque des revendications précédentes dans laquelle la cornière d'assemblage (10 ; 100) est réalisée ou formée à partir d'une pièce rectangulaire de tôle.

11. Cornière d'assemblage (10 ; 100) telle que revendiquée dans l'une quelconque des revendications 1 à 9 dans laquelle la cornière d'assemblage (10 ; 100) est réalisée ou formée à partir d'une pièce polygonale de tôle.

12. Cornière d'assemblage (10 ; 100) telle que revendiquée dans l'une quelconque des revendications précédentes dans laquelle la cornière d'assemblage (10 ; 100) est réalisée ou formée à partir d'une pièce de tôle.

13. Cornière d'assemblage (10 ; 100) telle que revendiquée dans l'une quelconque des revendications précédentes dans laquelle la cornière d'assemblage (10 ; 100) est réalisée en un acier galvanisé à haute résistance.

14. Cornière d'assemblage (10 ; 100) telle que revendiquée dans l'une quelconque des revendications précédentes dans laquelle la cornière d'assemblage (10 ; 100) est réalisée en tôle ayant une épaisseur allant de 0,5 à 5 mm, plus préférablement de 1 à 3,5 mm, idéalement 1 mm.

15. Cornière d'assemblage (10 ; 100) pour assembler un premier élément de construction (200) à un deuxième élément de construction (300), où la cornière d'assemblage (10 ; 100) comprend :
une première branche (20) prévue dans un premier plan, la première branche (20) comprenant un bord d'assemblage s'étendant sur une longueur d'assemblage (l1) dans un axe longitudinal (x) et une première partie d'extrémité libre (25) distale par rapport au bord d'assemblage, la première branche (20) ayant un centre de gravité de surface (a1) et une hauteur (h1) ; et
une deuxième branche (30) prévue dans un deuxième plan, la deuxième branche (30) comprenant un bord d'assemblage s'étendant sur une longueur d'assemblage (l1) dans l'axe longitudinal (x) et une deuxième partie d'extrémité libre (35) distale par rapport au bord d'assemblage, la deuxième branche (30) ayant un centre de gravité de surface (a2) et une hauteur (h2), dans laquelle :
la première branche (20) et la deuxième branche (30) sont agencées de manière essentiellement perpendiculaire l'une à l'autre par une ligne de pliage commune (40), ladite ligne de pliage commune (40) reliant ou assemblant les bords d'assemblage respectifs de la première branche (20) et de la deuxième branche (30) dans l'axe longitudinal (x) ;
au moins une partie de la première branche (20) entre le bord d'assemblage et son centre de gravité de surface (a1) est plus large dans un axe parallèle à l'axe longitudinal (x) que la partie la plus large de la première branche (20) entre son centre de gravité de surface (a1) et la première partie d'extrémité libre (25) ;
au moins une partie de la deuxième branche (30) entre le bord d'assemblage et son centre de gravité de surface (a2) est plus large dans un axe parallèle à l'axe longitudinal (x) que la partie la plus large de la deuxième branche (20) entre son centre de gravité de surface (a2) et la deuxième partie d'extrémité libre (35) ;
la longueur d'assemblage (l1) de la cornière d'assemblage (10 ; 100) est supérieure à la hauteur (h1) de la première branche (20) ou à la hauteur (h2) de la deuxième branche (30) ; et
la ligne de pliage commune (40) s'étendant dans l'axe longitudinal (x) forme et/ou définit la partie la plus large de la cornière d'assemblage (10 ; 100) dans l'axe longitudinal (x) ou des axes longitudinaux parallèles à celui-ci.
